# FASCICULE DE BREVET EUROPEEN

(11) **EP 3 590 269 B1**
(45) Date de publication et mention de la délivrance du brevet: **31.03.2021**
(21) Numéro de dépôt: 18710111.8
(22) Date de dépôt: 27.02.2018
(51) Int. Cl.: H04Q 9/00, F17C 13/02, G06Q 10/08

(54) **DISPOSITIF DE MESURE ET DE COMMUNICATION POUR UNE CUVE DE STOCKAGE ET/OU DE TRANSPORT**
MESS- UND KOMMUNIKATIONSVORRICHTUNG FÜR EIN AUFBEWAHRUNGS- UND/ODER TRANSPORTGEFÄSS
MEASUREMENT AND COMMUNICATION DEVICE FOR A STORAGE AND/OR TRANSPORT VESSEL

(30) Priorité: 01.03.2017 FR 1751664
(43) Date de publication de la demande: 08.01.2020
(73) Titulaire: Chaudriconcept, 69530 Brignais (FR)
(72) Inventeur: DUBUT, Philippe, 69530 Brignais (FR)
(74) Mandataire: Verriest, Philippe
(86) Numéro de dépôt international: PCT/FR2018/050455
(87) Numéro de publication internationale: WO 2018/158534

(56) Documents cités:
- EP-A1- 3 118 824
- WO-A1-2005/038735
- CN-Y- 2 824 455
- FR-A1- 2 895 377
- FR-A1- 2 990 026
- US-A1- 2009 109 040

## Description

### Domaine de l'invention

La présente invention concerne un dispositif de mesure et de communication pour une cuve de stockage et/ou de transport et un système de commande et/ou de contrôle dudit dispositif. Ladite cuve est adaptée au stockage et/ou au transport de produits sous forme liquide, solide et/ou gazeuse pouvant être sensibles et/ou dangereux.

### Art antérieur

Il est connu d'utiliser des cuves de stockage et/ou de transport comprenant un produit sensible et/ou dangereux. Par exemple dans l'industrie pharmaceutique : les vaccins, les produits biologiques sont sensibles et doivent être stockés dans des cuves spécifiques étanches.

Ces produits sensibles et/ou dangereux risquent d'être dénaturés et/ou de créer des dommages au milieu extérieur à cause de mauvaises conditions de stockage et/ou de transport. En outre l'apparition d'une fuite peut s'avérer dangereux.

Selon un autre exemple, des produits chimiques explosifs sont sensibles à la pression à la température, aux mouvements brusques ou aux chocs. De même, des produits radioactifs contaminants par radiation ou par contact doivent être entreposés dans des cuves de stockage et/ou de transport étanches.

Le document WO 2005/038735 A1 propose un système de surveillance à distance pour un réservoir de stockage mobile ayant un conteneur pour stocker un gaz liquéfié à des températures cryogéniques. Il comprend une unité de géolocalisation et une unité de télémétrie.

Il est connu d'utiliser divers capteurs pour contrôler le bon état d'une cuve de stockage et/ou de transport. Toutefois il s'avère délicat de procéder au transport de la cuve de stockage et/ou de transport tout en contrôlant régulièrement son bon état.

Par ailleurs, le transport routier, aérien ou naval est susceptible d'engendrer des vibrations endommageant la cuve de stockage et/ou de transport.

Il est possible de procéder à des contrôles au départ et à l'arrivée de la cuve de stockage et/ou de transport transportée. Toutefois la traçabilité reste difficile à mettre en œuvre et un dommage à la cuve ou au produit stocké risque de ne pas être détecté.

La présente invention vise à résoudre tout ou partie des inconvénients mentionnés ci-dessus.

### Exposé de l'invention

A cet effet, la présente invention concerne un dispositif de mesure et de communication pour une cuve de stockage et/ou de transport d'un produit, le dispositif de mesure et de communication comprenant :
- un capteur apte à mesurer une grandeur physique relative à la cuve de stockage et/ou de transport et/ou au produit stocké dans la cuve de stockage,
- un module de géolocalisation configuré pour déterminer des coordonnées géographiques du dispositif de mesure et de communication,
- une unité de communication apte à envoyer des informations à destination d'un serveur distant selon un protocole de communication par ondes radio,
- une unité de contrôle pourvue d'un processeur, l'unité de contrôle étant agencée pour commander et/ou contrôler le capteur, le module de géolocalisation et et l'unité de communication.

Le dispositif de mesure et de communication permet de surveiller de manière continue le déplacement de la cuve de stockage et/ou de transport et également la grandeur physique relative à la cuve de stockage et/ou de transport.

Il est ainsi possible de connaître le parcours de la cuve stockage et/ou de transport et détecter une condition anormale liées à la grandeur physique. Le but est de déterminer si la cuve est endommagée.

Cette disposition est donc intéressante car il est possible de détecter de manière quasiment immédiate une détérioration du produit stocké pendant le transport.

Il n'est donc pas nécessaire d'attendre l'arrivée de la cuve de stockage et/ou de transport à sa destination pour constater une anomalie susceptible d'engendrer une détérioration du produit stocké.

Selon un aspect de l'invention, le serveur distant comprend un système de sécurité apte à protéger les informations échangées entre le serveur distant et le dispositif de mesure et de communication de tentatives de récupération par des opérateurs non autorisés.

Cette disposition permet d'une part de s'assurer de la validité des mesures récupérées par le serveur distant et d'autre part de limiter l'accès aux informations échangées aux seules personnes autorisées.

Selon un aspect de l'invention, le dispositif de mesure et de communication comprend un détecteur d'ouverture configuré pour déterminer un état ouvert ou un état fermé d'une ouverture de la cuve de stockage et/ou de transport par un élément de fermeture de la cuve de stockage et/ou de transport.

De préférence, l'unité de contrôle étant agencée pour commander et/ou contrôler le détecteur d'ouverture.

Il est donc possible de savoir si l'élément de fermeture est déplacé entre l'état ouvert et l'état fermé et à distance et de manière continue.

Le dispositif de mesure et de communication permet donc de s'assurer que le produite stocké est conservé dans de bonnes conditions avec le capteur et également que la cuve n'a pas été ouverte pendant le transport.

Cette disposition est particulièrement intéressante lorsque le produit stocké a une grande valeur et/ou est un produit devant être stocké dans des conditions précises pour conserver sa qualité.

Selon un aspect de l'invention, le dispositif de mesure et de communication comprend un détecteur de présence d'un capot de protection de la cuve de stockage et/ou de transport en une position montée.

De préférence, l'unité de contrôle étant agencée pour commander et/ou contrôler le détecteur de présente.

Cette disposition permet de s'assurer que le capot de protection de la cuve de stockage et/ou de transport n'a pas été enlevé lors du transport et en temps réel.

Selon un aspect de l'invention, le dispositif de mesure et de communication comprend un boitier amovible dans lequel sont ménagés le module de géolocalisation, l'unité de communication et l'unité de contrôle.

Cette disposition permet de désolidariser de manière aisée les composants les plus complexes du dispositif de mesure et de communication.

Il est ainsi possible de récupérer sur une cuve de stockage et/ou de transport le boitier amovible sans que le capteur, le détecteur d'ouverture et/ou le détecteur de présence doivent être débranchés.

Il est donc possible de prévoir d'associer un capteur, un détecteur d'ouverture et/ou un détecteur de présence à une cuve de stockage et/ou de transport tandis que le boitier amovible peut être interchangeable d'une cuve à l'autre.

Le fait de disposer d'un boitier amovible permet également un montage et démontage aisé du capteur, du détecteur d'ouverture et/ou du détecteur de présence. Le boitier amovible ne risque pas d'être endommagé lors du montage ou du démontage.

Selon un aspect de l'invention, le boitier amovible comprend un élément de coopération configuré pour coopérer avec un élément de coopération complémentaire du dispositif de mesure et de communication.

Cette disposition permet un raccordement et une séparation rapide du boitier amovible du reste du dispositif de mesure et de communication.

Il est donc aisé de récupérer un boitier amovible sur une cuve de stockage et/ou de transport comprenant un dispositif de mesure et de communication.

Selon un aspect de l'invention, le boitier amovible comprend au moins deux éléments de coopérations configurés pour coopérer avec au moins deux éléments de coopération complémantaires du dispositif de mesure et de communication.

Cette disposition permet de définir une unique position de coopération et donc de réaliser une mise en place aisée du boitier.

Selon un aspect de l'invention, le dispositif de mesure et de communication comprend un berceau d'accueil pour le boitier amovible.

Cette disposition permet de réaliser rapidement et de manière fiable le raccordement du boitier amovible au reste du dispositif de mesure et de communication. En effet le berceau d'accueil permet de positionner le boitier amovible pour son bon raccordement.

Selon un aspect de l'invention, le dispositif de mesure et de communication comprend un système de maintien en position configuré pour maintenir la coopération entre le boitier amovible et le berceau d'accueil en une position fermée.

Cette disposition permet de protéger le boitier amovible car il n'est pas possible de le désolidariser du berceau d'accueil une fois en position.

Selon un aspect de l'invention, le système de maintien en position est apte à être disposé en une position ouverte dans laquelle le boitier amovible est apte à être désolidarisé du reste du dispositif de mesure et de communication.

De préférence, le système de maintien en position est conformé pour être disposé en position ouverte par l'utilisation d'un outil dédié.

Ainsi le boitier amovible ne peut être désolidarisé du reste du dispositif de mesure et de communication que par une personne autorisée disposant de l'outil dédié.

Selon un aspect de l'invention, le ou les éléments de coopération et le ou les éléments de coopération complémentaires sont compris dans le système de maintien en position.

Ainsi le système de maintien en position permet une disposition simple du boitier amovible ainsi que son maintien automatique en position de coopération. La mise en place du boitier amovible au sein du dispositif de mesure et de communication est donc aisée.

Selon un aspect de l'invention, le dispositif de mesure et de communication comprend une pluralité de capteurs, chaque capteur étant configuré pour mesurer une grandeur physique correspondante relative à la cuve de stockage et/ou de transport et/ou au produit stocké dans la cuve de stockage et/ou de transport.

Selon un aspect de l'invention, le boitier amovible comprend un ou des connecteurs configurés pour coopérer avec un ou des connecteurs complémentaires des capteurs.

Cette disposition permet de raccorder ou des débrancher le ou les capteurs alors que le boitier amovible ne coopère pas avec le reste du dispositif de mesure et de communication.

Selon un autre aspect de l'invention, le ou les capteurs sont aptes à être désolidarirés du dispositif de mesure et de communication.

Cette disposition facilite le raccordement ou l'enlèvement des capteurs de la cuve de stockage et/ou de transport. Il est également possible de récupérer des capteurs sur une cuve en vue de les réutiliser sur une autre cuve.

Selon un aspect de l'invention, un capteur est configuré pour mesurer une pression interne à la cuve de stockage et/ou de transport. Selon un aspect de l'invention, un capteur est configuré pour mesurer une température de la cuve de stockage et/ou de transport et/ou du produit stocké. Selon un aspect de l'invention, un capteur est configuré pour mesurer un niveau de remplissage de la cuve de stockage et/ou de transport en produit stocké. Selon un aspect de l'invention, un capteur est configuré pour mesurer une pression interne à la cuve de stockage et/ou de transport. Selon un aspect de l'invention, un capteur est configuré pour mesurer une valeur de radiation nucléaire. Selon un aspect de l'invention, un capteur est configuré pour mesurer l'intensité d'un champ magnétique.

Selon un aspect de l'invention, le dispositif de mesure et de communication comprend un module de détection et de reconnaissance d'une puce d'identification de la cuve de stockage et/ou de transport.

Cette disposition permet de réaliser un appairage entre le dispositif de mesure et de communication, qui peut être utilisé avec tout type de cuve de stockage et/ou de transport, avec une cuve particulière.

Ainsi il n'est pas nécessaire de programmer le dispositif de mesure et de communication pour renseigner une référence ou un numéro de série de la cuve de stockage et/ou de transport.

Selon un aspect de l'invention, le module de détection et de reconnaissance est ménagé dans le boitier amovible.

Selon un aspect de l'invention, le dispositif de mesure et de communication comprend un accéléromètre.

Cette disposition permet de détecter si la cuve de stockage et/ou de transport est bien en position debout et qu'elle n'est pas tombée. Selon un aspect de l'invention, l'accéléromètre est ménagé dans le boitier amovible.

Selon un aspect de l'invention, l'unité de contrôle comprend une mémoire agencée pour comprendre une pluralité de valeurs mesurées en provenance du capteur.

Cette disposition permet de conserver les valeurs mesurées avant de les envoyer. Ainsi il est possible de définir une fréquence d'envoi des valeurs mesurées, par exemple toutes les dix minutes.

La consommation énergétique du dispositif de mesure et de communication est ainsi réduite car les valeurs mesurées ne sont pas communiquées une par une.

Selon un aspect de l'invention, la mémoire de l'unité de contrôle est agencée pour comprendre des valeurs mesurées en provenance de la pluralité de capteurs, du détecteur d'ouverture et/ou du détecteur de présence.

La présente invention concerne également un système de commande et/ou de contrôle comprenant :
- une pluralité de dispositifs de mesure et de communication tel que décrits ci-avant,
- un serveur distant comprenant un module de communication configuré pour échanger des informations avec la pluralité de dispositifs de mesure et de communication,
- une interface de commande et/ou de contrôle configurée pour recevoir des informations en provenance de la pluralité de dispositifs de mesure et de communication et/ou pour envoyer une requête d'obtention desdites informations.

Cette disposition permet le suivi du déplacement de chaque cuve de stockage et/ou de transport. Il est également possible de détecter une détérioration du produits stocké quel que soit sa localisation.

Les différents aspects définis ci-dessus non incompatibles peuvent être combinés.

### Brève description des figures

L'invention sera mieux comprise à l'aide de la description détaillée qui est exposée ci-dessous en regard du dessin annexé dans lequel :
- la figure 1 est une vue schématique d'un système de commande et/ou de contrôle d'une pluralité de dispositifs de mesure et de communication;
- la figure 2 est une vue schématique d'une cuve de stockage et/ou de transport sur laquelle est monté un dispositif de mesure et de communication ;
- la figure 3a est une vue de face et la figure 3b une vue de côté d'un berceau d'accueil du dispositif de mesure et de communication ;
- la figure 4a est une vue de face et la figure 4b une vue de côté du dispositif de mesure et de communication.

### Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

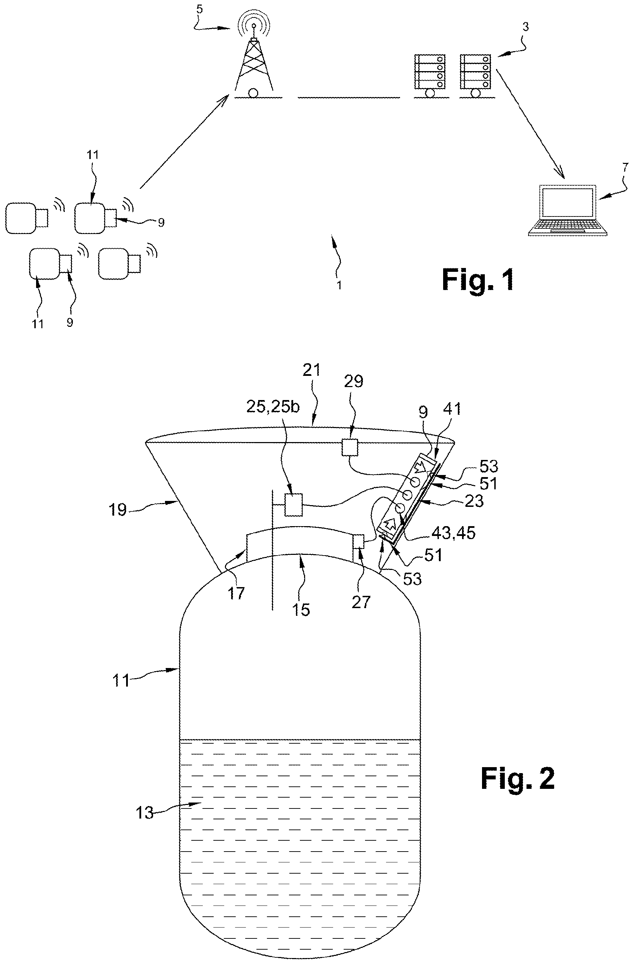

Comme illustré à la figure 1, un système de commande et/ou de contrôle 1 comprend un serveur distant 3, un module de communication 5 et une interface de commande et/ou de contrôle 7.

Dans le mode de réalisation présenté, l'interface de commande et/ou de contrôle 7 est agencée pour échanger des informations avec le serveur distant 3 par Internet. Il est également possible de prévoir une interface de commande et/ou de contrôle 7 raccordée par câble au serveur distant 3.

Le système de commande et/ou de contrôle 1 est agencé pour commander et/ou contrôler une pluralité de dispositifs de mesure et de communication 9. Chaque dispositif de mesure et de communication 9 est rapporté sur une cuve de stockage et/ou de transport 11 comprenant un produit stocké 13.

La cuve de stockage et/ou de transport 11 est dans le mode de réalisation présenté une cuve de 45 litres et le produit stocké 13 est un vaccin sous forme liquide. Ce type de cuve est également connu sous le nom de « shipper vessel » et est destinée au transport de produits fragiles ou dangereux.

Cependant, le dispositif de mesure et de communication 9 décrit aux figures 2 à 4 convient à tout type de cuve de stockage et/ou de transport 11. Comme il apparait ci-après, le système de commande et/ou de contrôle 1 assure un acheminement en toute sécurité de la pluralité de cuves de stockage et/ou de transport 11 transportées par voie routière, navale et/ou aérienne.

Comme illustré à la figure 2, le dispositif de mesure et de communication 9 est rapporté sur la cuve de stockage et/ou de transport 11.

La cuve de stockage et/ou de transport 11 présente une ouverture 15 et comprend un élément de fermeture 17 de ladite ouverture 15 apte à être disposé en un état ouvert ou un état fermé. A la figure 2, l'élément de fermeture 17 est dans son état fermé. Cela signifie que l'ouverture 15 est fermée de manière étanche.

La cuve de stockage et/ou de transport 11 présente également une collerette 19 entourant l'ouverture 15 et s'étendant dans une direction opposée à l'intérieur de la cuve 11. La cuve de stockage et/ou de transport 11 comprend un capot de protection 21 apte à coopérer avec la collerette 19 en une position montée de manière à englober l'ouverture 15 pour empêcher toute ouverture intempestive.

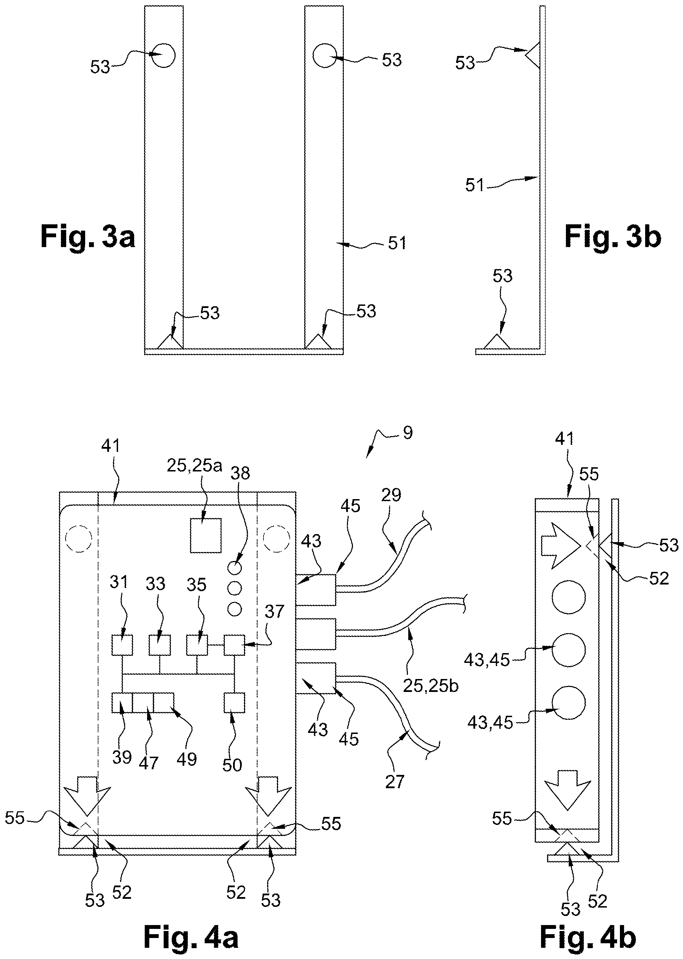

La cuve de stockage et/ou de transport 11 comprend en outre une puce d'identification 23, qui est de type RFID dans le mode de réalisation présenté. La puce d'identification 23 peut être rapportée sur une paroi de la cuve de stockage et/ou de transport 11 ou sur le dispositif de mesure et de communication 9 comme illustré à la figure 4.

Le dispositif de mesure et de communication 9 comprend une pluralité de capteurs 25. Chaque capteur 25 est configuré pour mesurer une grandeur physique correspondante relative à la cuve de stockage et/ou de transport 11 et/ou au produit stocké 13.

Comme illustré aux figures 2, 4a et 4b, un capteur 25a est agencé pour mesurer une température d'une paroi de la cuve et un capteur 25b est agencé pour mesurer une pression intérieure à la cuve de stockage et/ou de transport 11.

Dans d'autres modes de réalisation d'autres capteurs 25 peuvent être utilisés selon les grandeurs physiques dont la surveillance est pertinente pour s'assurer du bon transport du produit stocké 13.

Par exemple, un capteur 25 de mesure d'un niveau de remplissage de la cuve en produit stocké, un capteur 25 de mesure d'un niveau de radiation nucléaire et/ou un capteur 25 de mesure d'un niveau d'intensité d'un champ magnétique pourraient être utilisés.

Le dispositif de mesure et de communication 9 comprend également un détecteur d'ouverture 27 configuré pour déterminer l'état ouvert ou l'état fermé de l'élément de fermeture 17.

Le dispositif de mesure et de communication 9 comprend en outre un détecteur de présence 29 du capot de protection 21 en position montée.

Le dispositif de mesure et de communication 9 comprend une batterie 31, un module de géolocalisation 33, un module de détection et de reconnaissance 35 de la puce d'identification 23, une unité de communication 37 et une unité de contrôle 39 ménagés dans un boitier amovible 41 du dispositif de mesure et de communication 9 comme illustré à la figure 4.

Le boitier amovible 41 comprend des connecteurs 43 configurés pour coopérer avec des connecteurs complémentaires 45 du dispositif de mesure et de communication 9, les connecteurs complémentaires 45 étant raccordés par un raccordement filaire à la pluralité de capteurs 25, au détecteur d'ouverture 27 et au détecteur de présence 29.

Le module de géolocalisation 33 est configuré pour déterminer des coordonnées géographiques du dispositif de mesure et de communication 9. L'unité de communication 37 est configurée pour envoyer des informations à destination du serveur distant 3 selon un protocole de communication par ondes radio, par exemple Internet.

Le module de détection et de reconnaissance 35 est apte à détecter la puce d'identification 23 selon un protocole communication en champ proche ou NFC.

L'unité de communication 37 est également agencée pour recevoir une requête d'obtention d'informations émise depuis l'interface de commande et/ou de contrôle 7.

En outre l'unité de communication 37 est pourvue d'un afficheur à LED 38 destiné à indiquer un statut du dispositif de mesure et de communication, par exemple si la communication avec le serveur distant 3 est établie ou si un élément interne du dispositif 9 est défectueux.

Enfin l'unité de contrôle 39 est pourvue d'un processeur 47 et d'une mémoire 49 agencée pour comprendre des valeurs mesurées en provenance de la pluralité de capteurs 25, du détecteur d'ouverture 27 et/ou du détecteur de présence 29.

L'unité de contrôle 39 est agencée pour commander et/ou contrôler le module de géolocalisation 33, le module de détection et de reconnaissance 35 ainsi que l'unité de communication 37.

Ainsi selon la configuration de l'unité de contrôle 39, il est possible de définir une fréquence d'envoi des valeurs mesurées à destination du serveur distant 3. Cette disposition permet de limiter la sollicitation de la batterie 31 en évitant de transmettre les valeurs mesurées une par une dès la réalisation de la mesure.

Il est également possible de configurer l'unité de contrôle 39 pour que le transfert des valeurs mesurées se fasse en réponse à une requête d'obtention d'information. Plus généralement les deux possibilités sont utilisées simultanément.

Il est donc possible de contrôler à distance manuellement à partir de l'interface 7 selon une base temporelle plus précise lorsqu'une irrégularité dans les valeurs mesurées est détectée.

Le dispositif de mesure et de communication 9 comprend un accéléromètre 50 agencé pour détecter si la cuve de stockage et/ou de transport 11 a été renversée ou est bien en position debout.

Le dispositif de mesure et de communication 9 comprend en outre un berceau d'accueil 51 pour le boitier amovible 41.

Le dispositif de mesure et de communication 9 comprend un système de maintien en position 52 configuré pour maintenir la coopération entre le boitier amovible 41 et le berceau d'accueil 51 en une position fermée.

Le boitier amovible 41 comprend quatre éléments de coopération 55 aptes à coopérer avec quatre éléments de coopération complémentaires 53 disposés sur le berceau d'accueil 51, ces éléments 53, 55 étant compris dans le système de maintien en position 52.

Le berceau d'accueil 51 est rapporté sur une paroi de la cuve de stockage et/ou de transport 11.

Il apparait donc que la mise en place et le retrait du boitier amovible 41 est aisée et rapide. Il devient possible de définir un boitier amovible 41 standard interchangeable d'une cuve de stockage et/ou de transport 11 à un autre, tandis que les capteurs 25 et détecteurs d'ouverture 27 et de présence 29 peuvent être laissés sur la cuve 11.

Lorsque les capteurs 25 et détecteurs d'ouverture 27 et de présence 29 doivent être démontés, le boîtier amovible 41 est préalablement enlevé ce qui permet de disposer de plus de place pour un démontage n'abîmant pas la cuve de stockage et/ou de transport 11.

Par ailleurs, le système de maintien en position 52 est configuré pour que seul un outil dédié permette de désolidariser le boitier amovible 41 du berceau d'accueil 51. Ainsi seul le personnel autorisé peut démonter le boitier amovible 41.

Le système de commande et/ou de contrôle 1 précédemment décrit permet ainsi un suivi précis des conditions de transports de chaque cuve de stockage et/ou de transport 11. Le dispositif de mesure et de communication 9 est facile à mettre en place et à enlever.

Ce système de commande et/ou de contrôle 1 permet donc de gagner en terme de sécurité puisque tout incident est mesuré par un capteur 25 ou détecteur d'ouverture 27 et/ou de présence 29 et enregistré puis transmis au serveur distant 3.

Du temps peut également être gagné car le contrôle réalisé au départ et à l'arrivée de la cuve de stockage et/ou de transport 11 peut être beaucoup plus léger.

Comme il va de soi, l'invention ne se limite pas à la seule forme d'exécution décrite ci-dessus à titre d'exemple, elle en embrasse au contraire toutes les variantes de réalisation.

## Revendications

1. Dispositif de mesure et de communication (9) pour une cuve de stockage et/ou de transport (11) d'un produit (13), le dispositif de mesure et de communication (9) comprenant :
- un capteur (25) apte à mesurer une grandeur physique relative à la cuve de stockage et/ou de transport (11) et/ou au produit stocké (13) dans la cuve de stockage (11),
- un module de géolocalisation (33) configuré pour déterminer des coordonnées géographiques du dispositif de mesure et de communication (9),
- une unité de communication (37) apte à envoyer des informations à destination d'un serveur distant (3) selon un protocole de communication par ondes radio,
- une unité de contrôle (39) pourvue d'un processeur (47), l'unité de contrôle (39) étant agencée pour commander et/ou contrôler le capteur (25), le module de géolocalisation (33) et l'unité de communication (37)
**caractérisé en ce qu'**il comprend également
- un boitier amovible (41) dans lequel sont ménagés le module de géolocalisation (33), l'unité de communication (37) et l'unité de contrôle (39),
- un berceau d'accueil (51) pour le boitier amovible (41).

2. Dispositif de mesure et de communication (9) selon la revendication 1 comprenant un détecteur d'ouverture (27) configuré pour déterminer un état ouvert ou un état fermé d'une ouverture (15) de la cuve de stockage et/ou de transport (11) par un élément de fermeture (17) de la cuve de stockage et/ou de transport (11).

3. Dispositif de mesure et de communication (9) selon l'une des revendications 1 ou 2 comprenant un détecteur de présence (29) d'un capot de protection (21) de la cuve de stockage et/ou de transport (11) en une position montée.

4. Dispositif de mesure et de communication (9) selon la revendication 1, dans lequel le boitier amovible (41) comprend un élément de coopération (55) configuré pour coopérer avec un élément de coopération complémentaire (53) du dispositif de mesure et de communication (9).

5. Dispositif de mesure et de communication (9) selon la revendication 1, comprenant un système de maintien en position (52) configuré pour maintenir la coopération entre le boitier amovible (41) et le berceau d'accueil (51) en une position fermée.

6. Dispositif de mesure et de communication (9) selon l'une des revendications 1 à 5, comprenant une pluralité de capteurs (25), chaque capteur (25) étant configuré pour mesurer une grandeur physique correspondante relative à la cuve de stockage et/ou de transport (11) et/ou au produit stocké (13) dans la cuve de stockage et/ou de transport (11).

7. Dispositif de mesure et de communication (9) selon l'une des revendications 1 à 6 comprenant un module de détection et de reconnaissance (35) d'une puce d'identification (23) de la cuve de stockage et/ou de transport (11).

8. Dispositif de mesure et de communication (9) selon l'une des revendications 1 à 7 comprenant un accéléromètre (50).

9. Dispositif de mesure et de communication (9) selon l'une des revendications 1 à 8, dans lequel l'unité de contrôle (39) comprend une mémoire (49) agencée pour comprendre une pluralité de valeurs mesurées en provenance du capteur (25).

10. Système de commande et/ou de contrôle (1) comprenant :
- une pluralité de dispositifs de mesure et de communication (9) selon l'une des revendications 1 à 9,
- un serveur distant (3) comprenant un module de communication (5) configuré pour échanger des informations avec la pluralité de dispositifs de mesure et de communication (9),
- une interface de commande et/ou de contrôle (7) configurée pour recevoir des informations en provenance de la pluralité de dispositifs de mesure et de communication (9) et/ou pour envoyer une requête d'obtention desdites informations.

## Patentansprüche

1. Mess- und Kommunikationsvorrichtung (9) für ein Aufbewahrungs- und/oder Transportgefäß (11) eines Produkts (13), wobei die Mess- und Kommunikationsvorrichtung (9) umfasst:
- einen Sensor (25), der imstande ist, eine physikalische Größe in Bezug auf das Aufbewahrungs- und/oder Transportgefäß (11) und/oder das in dem Aufbewahrungsgefäß (11) aufbewahrte Produkt (13) zu messen,
- ein Geolokalisierungsmodul (33), das konfiguriert ist, um geografische Koordinaten der Mess- und Kommunikationsvorrichtung (9) zu bestimmen,
- eine Kommunikationseinheit (37), die imstande ist, Informationen an einen Fernserver (3) gemäß einem Kommunikationsprotokoll über Funkwellen zu senden,
- eine Kontrolleinheit (39), die mit einem Prozessor (47) versehen ist, wobei die Kontrolleinheit (39) angeordnet ist, um den Sensor (25), das Geolokalisierungsmodul (33) und die Kommunikationseinheit (37) zu steuern und/oder zu kontrollieren,
**dadurch gekennzeichnet, dass** sie auch Folgendes umfasst
- ein abnehmbares Gehäuse (41), in dem das Geolokalisierungsmodul (33), die Kommunikationseinheit (37) und die Kontrolleinheit (39) eingesetzt sind,
- einen Aufnahmehalter (51) für das abnehmbare Gehäuse (41).

2. Mess- und Kommunikationsvorrichtung (9) nach Anspruch 1, umfassend einen Öffnungsdetektor (27), der konfiguriert ist, um einen offenen Zustand oder einen geschlossenen Zustand einer Öffnung (15) des Aufbewahrungs- und/oder Transportgefäßes (11) durch ein Verschlusselement (17) des Aufbewahrungs- und/oder Transportgefäßes (11) zu bestimmen.

3. Mess- und Kommunikationsvorrichtung (9) nach einem der Ansprüche 1 oder 2, einen Anwesenheitsdetektor (29) einer Schutzabdeckung (21) des Aufbewahrungs- und/oder Transportgefäßes (11) in einer montierten Position umfassend.

4. Mess- und Kommunikationsvorrichtung (9) nach Anspruch 1, wobei das abnehmbare Gehäuse (41) ein Zusammenwirkungselement (55) umfasst, das konfiguriert ist, um mit einem ergänzenden Zusammenwirkungselement (53) der Mess- und Kommunikationsvorrichtung (9) zusammenzuwirken.

5. Mess- und Kommunikationsvorrichtung (9) nach Anspruch 1, umfassend ein System zum Festhalten in Position (52), das konfiguriert ist, das Zusammenwirken zwischen dem abnehmbaren Gehäuse (41) und dem Aufnahmehalter (51) in einer geschlossenen Position festzuhalten.

6. Mess- und Kommunikationsvorrichtung (9) nach einem der Ansprüche 1 bis 5, umfassend eine Vielzahl von Sensoren (25), wobei jeder Sensor (25) konfiguriert ist, um eine entsprechende physikalische Größe in Bezug auf das Aufbewahrungs- und/oder Transportgefäß (11) und/oder das in dem Aufbewahrungsgefäß (11) aufbewahrte Produkt (13) zu messen.

7. Mess- und Kommunikationsvorrichtung (9) nach einem der Ansprüche 1 bis 6, umfassend ein Detektions- und Erkennungsmodul (35) eines Identifikationschips (23) des Aufbewahrungs- und/oder Transportgefäßes (11).

8. Mess- und Kommunikationsvorrichtung (9) nach einem der Ansprüche 1 bis 7, umfassend einen Beschleunigungsmesser (50).

9. Mess- und Kommunikationsvorrichtung (9) nach einem der Ansprüche 1 bis 8, wobei die Kontrolleinheit (39) einen Speicher (49) umfasst, der angeordnet ist, um eine Vielzahl von Messwerten aus dem Sensor (25) zu umfassen.

10. Steuerungs- und/oder Kontrollsystem (1), umfassend:
- eine Vielzahl von Mess- und Kommunikationsvorrichtungen (9) nach einem der Ansprüche 1 bis 9,
- einen Fernserver (3), umfassend ein Kommunikationsmodul (5), das konfiguriert ist, um Informationen mit der Vielzahl von Mess- und Kommunikationsvorrichtungen (9) auszutauschen,
- eine Steuerungs- und/oder Kontrollschnittstelle (7), die konfiguriert ist, um Informationen von der Vielzahl von Mess- und Kommunikationsvorrichtungen (9) zu empfangen und/oder um eine Anfrage zum Erhalten der Informationen zu senden.

## Claims

1. A measurement and communication device (9) for a storage and/or transport tank (11) of a product (13), the measurement and communication device (9) comprising:
- a sensor (25) capable of measuring a physical magnitude relative to the storage and/or transport tank (11) and/or to the product stored (13) in the storage tank (11),
- a geolocation module (33) configured to determine the geographical coordinates of the measurement and communication device (9),
- a communication unit (37) capable of sending information to a remote server (3) according to a radio wave communication protocol,
- a monitoring unit (39) provided with a processor (47), the monitoring unit (39) being arranged to control and/or monitor the sensor (25), the geolocation module (33) and the communication unit (37) **characterized in that** it also comprises
- a removable casing (41) in which are formed the geolocation module (33), the communication unit (37) and the monitoring unit (39),
- a reception cradle (51) for the removable casing (41).

2. The measurement and communication device (9) according to claim 1 comprising an opening detector (27) configured to determine an open state or a closed state of an opening (15) of the storage and/or transport tank (11) by an element for closing (17) the storage and/or transport tank (11).

3. The measurement and communication device (9) according to any of claims 1 or 2 comprising a presence detector (29) of a protective cover (21) of the storage and/or transport tank (11) in a raised position.

4. The measurement and communication device (9) according to claim 1, wherein the removable casing (41) comprises a cooperation element (55) configured to cooperate with a cooperation element (53) complementary with the measurement and communication device (9).

5. The measurement and communication device (9) according to claim 1, comprising a position holding system (52) configured to hold the cooperation between the removable casing (41) and the reception cradle (51) in a closed position.

6. The measurement and communication device (9) according to any of claims 1 to 5, comprising a plurality of sensors (25), each sensor (25) being configured to measure a corresponding physical magnitude relative to the storage and/or transport tank (11) and/or the product stored (13) in the storage and/or transport tank (11).

7. The measurement and communication device (9) according to any of claims 1 to 6 comprising a module for detecting and recognizing (35) an identification chip (23) of the storage and/or transport tank (11).

8. The measurement and communication device (9) according to any of claims 1 to 7 comprising an accelerometer (50).

9. The measurement and communication device (9) according to any of claims 1 to 8, wherein the monitoring unit (39) comprises a memory (49) arranged to comprise a plurality of measured values from the sensor (25).

10. The control and/or monitoring system (1) comprising:
- a plurality of measurement and communication devices (9) according to any of claims 1 to 9,
- a remote server (3) comprising a communication module (5) configured to exchange information with the plurality of measurement and communication devices (9),
- a control and/or monitoring interface (7) configured to receive information from the plurality of measurement and communication devices (9) and/or to send a request to obtain said information.
